# EUROPÄISCHE PATENTSCHRIFT

(11) **EP 2 398 738 B1**
(45) Veröffentlichungstag und Bekanntmachung des Hinweises auf die Patenterteilung: **04.07.2018**
(21) Anmeldenummer: 10703619.6
(22) Anmeldetag: 04.02.2010
(51) Int. Cl.: C01G 23/07, C09C 1/36

(54) **MEHRSTUFIGES VERFAHREN ZUR HERSTELLUNG VON TITANDIOXID**
MULTISTAGE METHOD FOR PRODUCING TITANIUM DIOXIDE
PROCÉDÉ À ÉTAPES MULTIPLES POUR PRODUIRE DU DIOXYDE DE TITANE

(30) Priorität: 20.02.2009 DE 102009009780
(43) Veröffentlichungstag der Anmeldung: 28.12.2011
(73) Patentinhaber: KRONOS INTERNATIONAL, INC., 51373 Leverkusen (DE)
(72) Erfinder: GRUBER, Rainer, 51379 Leverkusen (DE)
(86) Internationale Anmeldenummer: PCT/EP2010/000677
(87) Internationale Veröffentlichungsnummer: WO 2010/094400

(56) Entgegenhaltungen:
- WO-A2-2009/049787
- DE-A1- 2 225 794
- US-A1- 2005 201 927

## Beschreibung

### Gebiet der Erfindung

Die Erfindung betrifft die Herstellung von Titandioxid durch Oxidation von Titantetrachlorid in einem mehrstufigen Verfahren, wobei in der ersten Stufe flüssiges Titantetrachlorid eingesetzt wird.

### Technologischer Hintergrund der Erfindung

In einem der kommerziell angewendeten Verfahren zur Herstellung von Titandioxid-Pigmentpartikeln, dem sogenannten Chloridverfahren, wird Titantetrachlorid (TiCl₄) mit einem oxidierenden Gas wie Sauerstoff, Luft etc. sowie mit bestimmten Additiven in einem Rohrreaktor zu Titandioxid und Chlorgas umgesetzt:

TiCl₄ + O₂ → TiO₂ + 2 Cl₂

Die TiO₂-Partikel werden anschließend von dem Chlorgas abgetrennt. Als Additve sind AlCl₃ als Rutilisierer sowie Wasserdampf oder Alkalisalze als Keimbildner bekannt.

Dieser Prozess wird zumeist einstufig durchgeführt, wie z. B. in US 3,615,202 oder EP 0 427 878 B1 beschrieben. Diese Reaktionsführung ist jedoch energetisch ungünstig, da aufgrund der hohen Aktivierungsenergie der Oxidation von TiCl₄ die Edukte so stark vorerhitzt werden müssen, dass eine adiabate Mischtemperatur der Edukte vor einsetzender Reaktion von ca. 800 °C erreicht wird, damit die Reaktion vollständig abläuft. Die Oxidationsreaktion ist jedoch stark exotherm, so dass nach vollständigem, adiabaten Umsatz die Temperatur des Produktstroms um etwa 900°C höher liegt als die der Edukte. Bis zur Abtrennung der TiO₂-Partikel von den gasförmigen Reaktionsprodukten mit Hilfe eines Filters muss dieses Gemisch in einer Kühlstrecke erheblich abgekühlt werden, um Schäden am Filter zu vermeiden.

Zwecks energetischer Optimierung sind daher mehrstufige Varianten des Chloridverfahrens entwickelt worden, bei denen nur ein Teil der Edukte erhitzt und einer ersten Stufe zugeführt werden. Der Rest der Edukte wird geringfügig erhitzt oder sogar nicht-erhitzt in die zweite Stufe dosiert. Dort werden die Edukte durch die in der ersten Stufe freigesetzte Reaktionsenthalpie erhitzt und reagieren ihrerseits. Es ist möglich, in die zweite Stufe allein TiCl₄ oder TiCl₄ und Sauerstoff zu dosieren. Ferner ist es möglich, neben einer zweiten Stufe auch weitere Stufen mit geringfügig erhitzten oder kalten Edukten vorzusehen.

Beispielsweise wird in der EP 0 583 063 B1 eine zweistufige Einleitung von TiCl₄ in den Reaktor beschrieben. TiCl₄ wird an einem ersten Einlasspunkt mit einer Temperatur von mindestens 450 °C und vermischt mit AlCl₃ und an einem weiteren Einlasspunkt mit einer Temperatur von 350 °C bis 400 °C und ohne AlCl₃ in den heißen Sauerstoffstrom geleitet. US2005/0201927 offenbart ein mehrstufiges Verfahren zur Herstellung von Titandioxid-Partikeln durch Reaktion von Titantetrachlorid mit einem sauerstoffhaltigen Strom, wobei in einer ersten Stufe gasförmiges TiCl₄ zusammen mit einem vorgeheiztem Sauerstoffstrom in den Oxidationsreaktor eingeleitet wird und bei 1204-1538 °C zur Reaktion gebracht wird. Durch anschließende Zugabe eines kalten, inerten Gases wird das Wachstum der entstandenen TiO₂-Partikel gestoppt. Die die Titandioxid-Partikel enthaltende Gassuspension wird in eine weitere Reaktionszone geleitet, in der weiteres gasförmiges TiCl₄ und Sauerstoff in die Gassuspension geleitet werden können.

Das Verfahren gemäß EP 0 852 568 B1 sieht vor, neben TiCl₄ auch den Sauerstoff zweistufig zu dosieren. Zielsetzung dieses Verfahrens ist die wirksame Kontrolle der mittleren TiO₂-Partikelgröße und damit des Farbstichs des TiO₂-Pigmentgrundkörpers. Hier wird in einen etwa 950 °C heißen Sauerstoffstrom zunächst etwa 400 °C heißer TiCl₄-Dampf geleitet. In der nachfolgenden Reaktionszone bilden sich die TiO₂-Partikel und findet das Partikelwachstum statt. An einem zweiten Einlasspunkt wird weniger stark erwärmter TiCl₄-Dampf (ca. 180 °C) zugeführt. Sauerstoff wird an dem zweiten Einlasspunkt mit einer Temperatur zwischen 25 und 1040 °C eingeleitet, wobei die Temperatur der Mischung ausreichend ist, um die Reaktion einzuleiten.

Das mehrstufige Verfahren gemäß US 6,387,347 B1 soll zusätzlich die Agglomeratbildung reduzieren. Hierzu wird der bereits erhitzte TiCl₄-Strom vor der Dosierung in den Reaktor in zwei Teilströme aufgeteilt. Ein Teilstrom (etwa 60 %) wird in der ersten Stufe des Reaktors oxidiert. Der zweite Teilstrom (etwa 40 %) wird durch Einsprühen von flüssigem TiCl₄ abgekühlt (De-Superheating) und anschließend in den Reaktor dosiert. Das De-Superheating findet außerhalb des Reaktors statt, wobei die Kondensationstemperatur des Gesamtstroms nicht unterschritten wird.

Ein ähnliches Verfahren zur Herstellung von TiO₂ wird in der US 2008/0075654 A1 beschrieben. Die technische Lehre dieser US-Patentanmeldung beinhaltet, dass durch die Erniedrigung der Eingangstemperatur eines TiCl₄-Teilstroms die Partikelgröße des TiO₂-Produkts verringert werden kann. Dieser Effekt wird verstärkt, wenn die Eingangstemperatur von TiCl₄-Teilstrom 2 niedriger als von TiCl₄-Teilstrom 1 ist, und wird abgeschwächt, wenn das Temperaturverhältnis umgekehrt ist (siehe Beispiele 1 und 4).

Die US 2007/0172414 A1 offenbart ein mehrstufiges Verfahren zur Reaktion von TiCl₄ und O₂, bei dem in der ersten Stufe gasförmiges TiCl₄ und in der zweiten Stufe flüssiges TiCl₄ in den Reaktor eingeleitet wird. Dieses Verfahren ermöglicht Energieeinsparungen und eine Verbesserung des Partikelgrößenspektrums.

Allen diesen Prozessen ist gemeinsam, dass die Edukte, die zur ersten Stufe geführt werden, stark erhitzt werden. Die erste Stufe wird also mit stark erhitztem Sauerstoff und erhitztem dampfförmigen TiCl₄ betrieben. Ein Nachteil dieser Form der mehrstufigen Reaktion besteht jedoch darin, dass die mittlere Partikelgröße mit dem Eduktanteil der zweiten und den nachfolgenden Stufen ansteigt. Dieser Effekt ist wahrscheinlich wie folgt zu erklären: Bei der Reaktion von TiCl₄ und Sauerstoff sind zwei konkurrierende Reaktionspfade möglich. Zum einen können TiCl₄ und O₂ direkt in der Gasphase miteinander reagieren (homogene Gasphasenreaktion), wodurch TiO₂-Moleküle entstehen, die durch Kollision und Versinterung miteinander zu Partikeln anwachsen. Zum anderen kann sich TiCl₄ auf der Oberfläche bereits bestehender TiO₂-Partikel anlagern und dort mit Sauerstoff zu TiO₂ reagieren. Dieser zweite Reaktionspfad führt nicht zur Entstehung neuer Partikel, sondern zur Vergrößerung bereits bestehender Partikel (Oberflächenreaktion).

Bei der einstufigen Oxidationsreaktion wird der erstgenannte Mechanismus bevorzugt, weil im Augenblick der Reaktion von TiCl₄ und O₂ praktisch keine Partikel vorhanden sind. Bei der zwei- und mehrstufigen Reaktion wird jedoch unverbranntes TiCl₄ in einen Strom von TiO₂-Partikeln dosiert, so dass im Vergleich zur einstufigen Reaktion eine Verschiebung des Reaktionsmechanismus zur Oberflächenreaktion stattfindet. Das Resultat ist ein Anstieg der mittleren Partikelgröße. Durch eine Absenkung der Temperatur der Reaktanten (TiCl₄, O₂) in einem Teilstrom beispielsweise durch De-Superheating - wie in US 6,387,347 B1 und US 2008/0075654 A1 beschrieben - kann die Geschwindigkeit der Oberflächenreaktion zwar verringert werden, so dass die mittlere Partikelgröße weniger stark ansteigt.

Im Ergebnis muss einem Anstieg der mittleren Partikelgröße allerdings durch vermehrte Zugabe von KCl oder einem anderen Wachstumsinhibitor begegnet werden. Diese Inhibitoren sind jedoch sehr korrosiv, so dass es zu einer vermehrten Korrosion der Apparate und zu erhöhtem Instandhaltungsaufwand kommt.

### Aufgabenstellung und Kurzfassung der Erfindung

Die Aufgabe der vorliegenden Erfindung bestand darin, ein mehrstufiges Verfahren zur Herstellung von Titandioxid durch Oxidation von Titantetrachlorid zu schaffen, das energetisch günstig ist und die genannten Nachteile der bekannten Verfahren überwindet.

Die Lösung der Aufgabe besteht in einem mehrstufigen Verfahren zur Herstellung von Titandioxid-Partikeln durch Reaktion von Titantetrachlorid mit einem sauerstoffhaltigen Gas in einem Rohrreaktor dadurch gekennzeichnet, dass in einer ersten Stufe flüssiges TiCl₄ in einen vorerhitzten sauerstoffhaltigen Gasstrom geleitet wird, wobei das Molverhältnis O₂: TiCl₄ mehr als 1 beträgt und wobei in der ersten Stufe höchstens 20 % der Gesamtmenge an TiCl₄ dosiert wird und sich eine erste TiO₂-Partikel enthaltende Gassuspension bildet und in einer zweiten Stufe gasförmiges TiCl₄ in die erste TiO₂-Partikel enthaltende Gassuspension geleitet wird.

Weitere vorteilhafte Ausformungen der Erfindung sind in den Unteransprüchen beschrieben.

### Beschreibung der Erfindung

Das erfindungsgemäße Verfahren unterscheidet sich von den bekannten mehrstufigen Chloridverfahren zur Herstellung von Titandioxid dadurch, dass das TiCl₄ in einer ersten Stufe in flüssiger Form und in einer zweiten Stufe in gasförmiger Form in den Oxidationsreaktor eingeleitet wird. In der ersten Stufe findet die Reaktion des flüssigen TiCl₄ mit einem Überschuss an vorerhitztem Sauerstoff statt, dadurch zündet das flüssige TiCl₄ auch in kalter Form ohne Vorerhitzung. Durch den Sauerstoffüberschuss entstehen in der Reaktionszone der ersten Stufe nur sehr feine TiO₂-Partikel, die als Keime für das Partikelwachstum in den weiteren Stufen dienen.

Die zweite Stufe des Oxidationsprozesses wird wie eine herkömmliche erste Stufe betrieben, wobei erhitztes gasförmiges TiCl₄ in den heißen sauerstoffhaltigen Gasstrom in den Reaktor eingeleitet wird.

In der ersten Stufe beträgt das Molverhältnis O₂ : TiCl₄ mehr als 1, bevorzugt mindestens 10 und insbesondere 20 bis 200.

In der ersten Stufe wird höchstens 20 % der Gesamtmenge TiCl₄ dosiert, bevorzugt höchstens 10 % und insbesondere höchstens 2 %.

Das erfindungsgemäße Verfahren kann auch eine dritte und gegebenenfalls weitere Verfahrensstufen umfassen. Es ist des Weiteren möglich, in der dritten bzw. in einer oder mehrerer weiterer Stufen TiCl₄ in flüssiger Form einzuleiten. Weiterhin ist es möglich, nach der ersten Stufe in mindestens einer der weiteren Stufen zusätzlich sauerstoffhaltiges Gas einzuleiten. Darüber hinaus kann es sich bei dem in mindestens einer der weiteren Stufen eingeleiteten sauerstoffhaltigen Gas um nicht-erhitztes Gas mit einer Temperatur von etwa 25 °C handeln. Dabei ist zu beachten, dass das gesamte dosierte TiCl₄ zu TiO₂ umgesetzt wird.

Im Vergleich zu einer herkömmlichen Zwei- oder Mehrstufenverbrennung von TiCl₄ bilden sich bei dem erfindungsgemäßen Verfahren feinere Partikel aus. Bei den herkömmlichen mehrstufigen Verfahren wie beispielsweise US 2008/0075654 A1 wird die TiO₂-Partikelgröße durch einen thermischen Effekt beeinflusst, indem durch eine erniedrigte Temperatur lediglich das Oberflächenwachstum der TiO₂-Partikel verlangsamt wird. Das vorliegende Verfahren zeichnet sich dagegen dadurch aus, dass in der ersten Stufe lediglich Kristallkeime gebildet werden, die in der zweiten Verbrennungsstufe als Impfkristalle wirken. Die geringere Partikelgröße wird möglicherweise zusätzlich auch dadurch begünstigt, dass die eingesprühten TiCl₄-Tropfen homogener in den sauerstoffhaltigen Gasstrom eingemischt werden als ein TiCl₄-Gas und deswegen verstärkt eine homogene Gasphasenreaktion ablaufen kann.

Das erfindungsgemäße Verfahren bietet die Möglichkeit, in einem gewissen Umfang die mittlere Partikelgröße des Endprodukts durch Einstellen der Menge flüssigen TiCl₄ in der ersten Stufe zu steuern. Zur genauen Einstellung einer bestimmten Partikelgröße ist dann im Vergleich zu herkömmlichen Verfahren kein oder zumindest eine geringere Menge KCl oder eines anderen Wachstumsinhibitors erforderlich. Damit sinkt auch der Instandhaltungsaufwand für die Reaktoranlage.

### Beispiele

Die nachfolgenden Beispiele dienen der weiteren Erläuterung der Erfindung, ohne dass damit eine Einschränkung der Erfindung verbunden ist.

### Beispiel 1:

Zur Herstellung von 10 t/h TiO₂ Pigment werden 3500 Nm³/h Sauerstoff auf 1650°C erhitzt und in einen Rohrreaktor geleitet. In den Sauerstoffstrom werden ca. 250 kg/h TiCl₄ flüssig eingesprüht. Das TiCl₄ reagiert mit einem geringen Teil des Sauerstoffs unter Bildung von sehr feinteiligem TiO₂ und Chlorgas. Das Gemisch aus Sauerstoff, Chlor und TiO₂ wird in einen zweiten Abschnitt des Rohrreaktors geleitet, in den 24 t/h gasförmiges TiCl₄ mit einer Temperatur von 450°C eingeleitet wird. Diesem TiCl₄-Strom ist AlCl₃ in einer Menge von 1,5 Gew.-% beigemischt. Der TiCl₄-AlCl₃-Gasstrom reagiert mit dem heißen Sauerstoff unter Bildung von TiO₂ und Chlorgas, wobei das TiO₂ aus der ersten Stufe als Keimbildner dient. Es entsteht auf diese Weise auch ohne Zusatz eines weiteren Wachstumsinhibitors ein ausreichend feinteiliges TiO₂ zur Verwendung als Weißpigment.

### Beispiel 2:

Zur Herstellung von 10 t/h TiO₂ Pigment werden 2800 Nm³/h Sauerstoff auf 1650°C erhitzt und in einen Rohrreaktor geleitet. In den Sauerstoffstrom werden ca. 200 kg/h TiCl₄ flüssig eingesprüht. Das TiCl₄ reagiert mit einem geringen Teil des Sauerstoffs unter Bildung von sehr feinteiligem TiO₂ und Chlorgas. Das Gemisch aus Sauerstoff, Chlor und TiO₂ wird in einen zweiten Abschnitt des Rohrreaktors geleitet, in den 12 t/h gasförmiges TiCl₄ mit einer Temperatur von 450°C eingeleitet wird. Diesem TiCl₄-Strom ist AlCl₃ in einer Menge von 1,5 Gew.-% beigemischt. Der TiCl₄-AlCl₃-Gasstrom reagiert mit dem heißen Sauerstoff unter Bildung von TiO₂ und Chlorgas, wobei das TiO₂ aus der ersten Stufe als Keimbildner dient. Das Gemisch aus Gas und TiO₂ wird in einen dritten Abschnitt des Rohrreaktors geleitet, wo nacheinander 700 Nm³/h nicht-erhitzter Sauerstoff mit einer Temperatur von etwa 25°C und 12 t/h flüssiges TiCl₄ eingedüst werden. Diese beiden Ströme werden durch den Gas-Feststoffstrom aus der zweiten Stufe erhitzt und reagieren unter Bildung von TiO₂ und Chlorgas. Es entsteht auf diese Weise auch ohne Zusatz eines weiteren Wachstumsinhibitors ein ausreichend feinteiliges TiO₂ zur Verwendung als Weißpigment.

Im Vergleich zu Beispiel 1 ist die Ausführung in diesem Beispiel besonders vorteilhaft weil energiesparend, da eine Vorerhitzung nur eines Teils des Sauerstoffs und TiCl₄ erforderlich ist. Die im dritten Abschnitt des Reaktors zudosierten Sauerstoff- und TiCl₄-Ströme werden mit Hilfe der freigesetzten Reaktionswärme aus den Stufen 1 und 2 erhitzt.

## Patentansprüche

1. Verfahren zur Herstellung von Titandioxid-Partikeln durch Reaktion von Titantetrachlorid mit einem sauerstoffhaltigen Gas in einem Rohrreaktor in einem mehrstufigen Verfahren **dadurch gekennzeichnet, dass** in einer ersten Stufe flüssiges TiCl₄ in einen vorerhitzten sauerstoffhaltigen Gasstrom geleitet wird, wobei das Molverhältnis O₂: TiCl₄ mehr als 1 beträgt und wobei in der ersten Stufe höchstens 20 % der Gesamtmenge an TiCl₄ dosiert wird und sich eine erste TiO₂-Partikel enthaltende Gassuspension bildet und
in einer zweiten Stufe gasförmiges TiCl₄ in die erste TiO₂-Partikel enthaltende Gassuspension geleitet wird.

2. Verfahren nach Anspruch 1 **dadurch gekennzeichnet, dass**
in der ersten Stufe das Molverhältnis O₂ : TiCl₄ mindestens 10, bevorzugt 20 bis 200 beträgt.

3. Verfahren nach Anspruch 1 oder 2 **dadurch gekennzeichnet, dass**
nach der zweiten Stufe in weiteren Stufen gasförmiges oder flüssiges TiCl₄ eingeleitet wird.

4. Verfahren nach einem oder mehreren der Ansprüche 1 bis 3 **dadurch gekennzeichnet, dass**
nach der ersten Stufe in mindestens einer der weiteren Stufen zusätzlich sauerstoffhaltiges Gas eingeleitet wird.

5. Verfahren nach einem oder mehreren der Ansprüche 1 bis 4 **dadurch gekennzeichnet, dass**
in der ersten Stufe höchstens 10 % und bevorzugt höchstens 2 % der Gesamtmenge TiCl₄ dosiert wird.

6. Verfahren nach einem oder mehreren der Ansprüche 1 bis 5 **dadurch gekennzeichnet, dass**
nach der ersten Stufe in mindestens einer der weiteren Stufen nicht-erhitztes sauerstoffhaltiges Gas eingeleitet wird.

## Claims

1. Method for manufacturing titanium dioxide particles by reacting titanium tetrachloride with an oxygen-containing gas in a tubular reactor by a multi-stage method, **characterised in that**
liquid TiCl₄ is fed into a preheated, oxygen-containing gas stream in a first stage, where the molar ratio of O₂ : TiCl₄ is greater than 1 and in the first stage at most 20 % of the total TiCl₄ quantity is dosed and a gas suspension containing initial TiO₂ particles is formed, and
gaseous TiCl₄ is fed into the gas suspension containing the initial TiO₂ particles in a second stage.

2. Method according to Claim 1, **characterised in that**
the molar ratio of O₂ : TiCl₄ in the first stage is at least 10, preferably 20 to 200.

3. Method according to Claim 1 or 2, **characterised in that**
gaseous or liquid TiCl₄ is introduced in further stages following the second stage.

4. Method according to one or more of Claims 1 to 3, **characterised in that** oxygen-containing gas is additionally introduced in at least one of the further stages following the first stage.

5. Method according to one or more of Claims 1 to 4, **characterised in that**
in the first stage at most 10 % of the total TiCl₄ quantity is dosed, preferably at most 2 %.

6. Method according to one or more of Claims 1 to 5, **characterised in that**
unheated oxygen-containing gas is introduced in at least one of the further stages following the first stage.

## Revendications

1. Procédé de fabrication de particules de dioxyde de titane par réaction de tétrachlorure de titane avec un gaz contenant de l'oxygène dans un réacteur tubulaire dans un procédé à plusieurs étapes, **caractérisé en ce que** dans une première étape du TiC14 liquide est acheminé dans un courant de gaz contenant de l'oxygène préchauffé, dans lequel le rapport molaire 0₂:TiCl₄ est supérieur à 1 et dans lequel dans la première étape au plus 20% de la quantité entière de TiCl₄ est dosé et une première suspension gazeuse contenant des particules de Ti0₂ se forme et dans une seconde étape du TiCl₄ gazeux est acheminé dans la première suspension gazeuse contenant des particules de Ti0₂.

2. Procédé selon la revendication 1, **caractérisé en ce que** dans la première étape le rapport molaire 0₂:TiCl₄ s'élève à au moins 10, de préférence est compris entre 20 et 200.

3. Procédé selon la revendication 1 ou 2, **caractérisé en ce qu'**après la deuxième étape du TiCl₄ gazeux ou liquide est introduit dans d'autres étapes.

4. Procédé selon l'une quelconque ou plusieurs des revendications 1 à 3, **caractérisé en ce qu'**après la première étape du gaz contenant de l'oxygéne est en outre introduit dans au moins une des autres étapes.

5. Procédé selon l'une quelconque ou plusieurs des revendications 1 à 4, **caractérisé en ce que** dans la première étape au plus 10 % et de préférence au plus 2 % de la quantité totale de TiCl₄ est dosé.

6. Procédé selon l'une quelconque ou plusieurs des revendications 1 à 5, **caractérisé en ce qu'**après la première étape du gaz contenant de l'oxygène non chauffé est introduit dans au moins une des autres étapes.
